Europäisches Patentamt

European Patent Office

Office européen des brevets

(19)

(11) **EP 0 421 341 B1**

(12) **EUROPEAN PATENT SPECIFICATION**

(45) Date of publication and mention
of the grant of the patent:
**17.03.1999 Bulletin 1999/11**

(51) Int Cl.⁶: **G10L 5/06**

(21) Application number: **90118858.1**

(22) Date of filing: **02.10.1990**

(54) **Speech recognizer**

Einrichtung zur Spracherkennung

Dispositif pour la reconnaissance de la parole

(84) Designated Contracting States:
**DE FR GB**

(30) Priority: **04.10.1989 JP 259034/89**
**10.08.1990 JP 212831/90**

(43) Date of publication of application:
**10.04.1991 Bulletin 1991/15**

(73) Proprietor: **MATSUSHITA ELECTRIC INDUSTRIAL
CO., LTD.
Kadoma-shi, Osaka-fu, 571 (JP)**

(72) Inventors:
• **Takizawa, Yumi
Neyagawa-shi, Osaka-fu (JP)**
• **Hamada, Masahiro
Hirakata-shi, Osaka-fu (JP)**

(74) Representative: **Eisenführ, Speiser & Partner
Martinistrasse 24
28195 Bremen (DE)**

(56) References cited:
**GB-A- 2 231 700**

• **ICASSP'87 (1987 INTERNATIONAL
CONFERENCE ON ACOUSTICS, SPEECH, AND
SIGNAL PROCESSING, Dallas, 6th - 9th April
1987), vol. 2, pages 717-720, IEEE, New York, US;
Y. CHEN: "Cepstral domain stress
compensation for robust speech recognition"**

**Description**

BACKGROUND OF THE INVENTION

The present invention relates to a speech recognizer.

In response to recent development of technology of speech recognition, speech recognizers are nearly put to practical use in various fields. In order to put the speech recognizers to practical use, many problems should be solved.

In practical use, states in which the speech recognizers are used change variously, thus resulting in variations of voices. For example, when noises in an environment surrounding the speech recognizers become large, speakers should utter loudly, thereby resulting in variations of voices. Meanwhile, when the speech recognizers are used for a long time, speakers become tired, thus resulting in variations of voices. Furthermore, when speakers are changed, voices vary more or less.

Therefore, if a state in which a speech recognizer has learnt a reference voice is different from a state in which the speech recognizer is used, a serious problem arises in that the reference voice cannot absorb the above mentioned variations of voices, thereby resulting in erroneous speech recognition.

In order to solve this problem, a countermeasure has been employed in which the speech recognizer is made to learn all foreseeable variation patterns of voices in advance. However, in order to make the speech recognizer learn all variation patterns of voices, learning time and capacity of the speech recognizer should be increased enormously and the operator should perform extremely troublesome operations, which is not practical.

Thus, in recent years, a method is proposed in which variations of voices are calculated each time the speech recognizer is used and analytical conditions are changed in accordance with variations of voices at the time of analysis of characteristic parameters of voices so as to absorb changes of spectral tilt caused by variations of voices, as has been disclosed at the ICASSP'87 (1987 INTERNATIONAL CONFERENCE ON ACOUSTICS, SPEECH, AND SIGNAL PROCESSING, Dallas, 6th - 9th April 1987), vol. 2, pages 717-720, IEEE, New York, US; Y. CHEN: "Cepstral domain stress compensation for robust speech recognition". By employing this method, variations of voices can be absorbed with shorter learning time and smaller capacity of the speech recognizer and less burden on the operator.

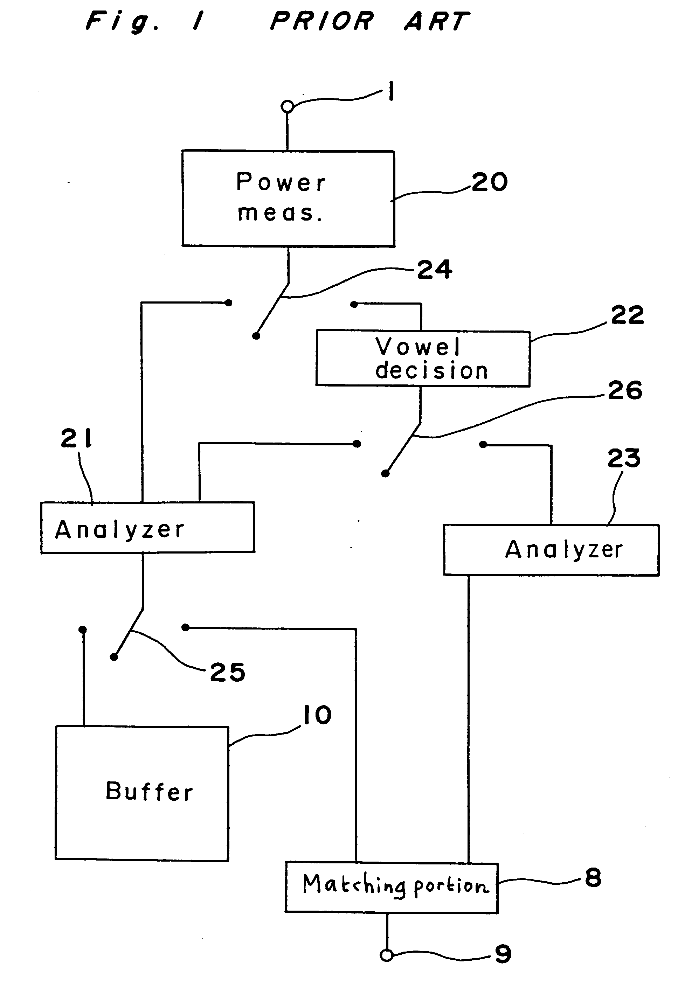

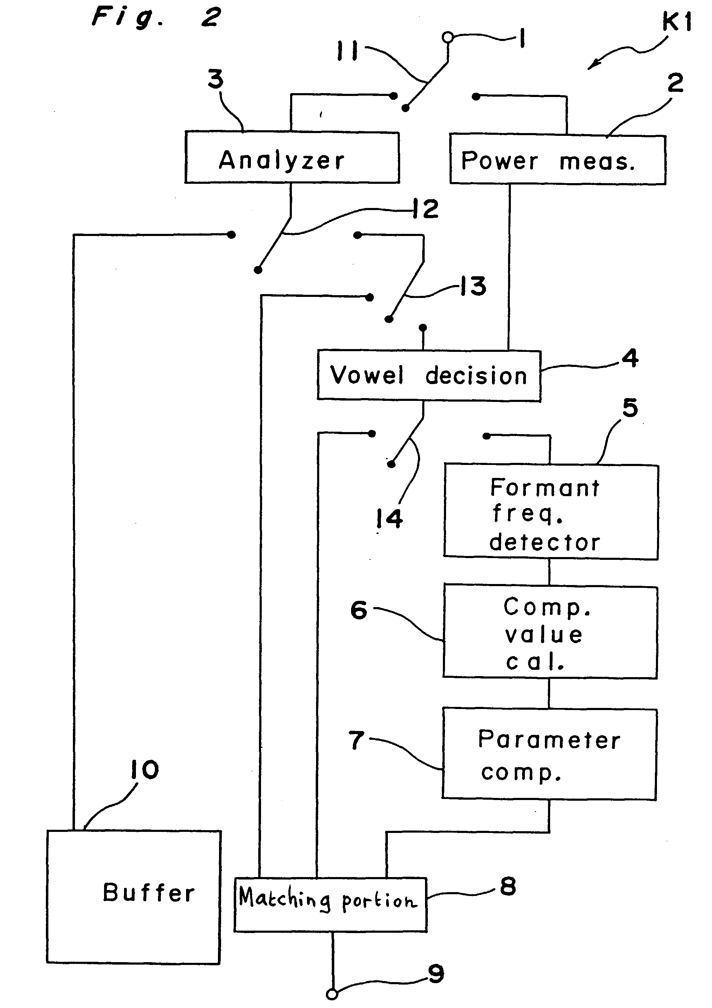

Hereinbelow, a known speech recognizer is described with reference to Fig. 1. The known speech recognizer is of a registration type in which the reference voice is made by inputting voice of user. As one example in which voices at the time of registration of a reference voice and at the time of recognition of a voice differ from each other, a case of changes of noises in an environment surrounding the speech recognizer is adopted. In Fig. 1, the known speech recognizer includes a signal input terminal 1, a power measuring portion 20, analyzers 21 and 23, a vowel deciding portion 22, a matching portion 8, an output terminal 9 for outputting recognition result, a buffer 10 for storing the reference voice and switches 24, 25 and 26.

The known speech recognizer of the above described arrangement is operated as follows. Initially, at the time of registration of the reference voice, noises in an environment surrounding the speech recognizer immediately before input of voices are inputted to the signal input terminal 1 and power of the environmental noises is calculated by the power measuring portion 20. If the powers of the environmental noises exceeds a predetermined threshold value P1, the environment is regarded as being unsuitable for registration of the reference voice and thus, registration of the reference voice is suspended. On the contrary, if the power of the environmental noises is not more than the threshold value P1, a signal for the reference voice inputted to the signal input terminal 1 is fed to the analyzer 21 where a characteristic parameter is calculated. At this time, the inputted signal is passed through a filter F1 expressed by the following equation (i).

$$F1(Z) = 1 - 0.9375 \times Z^{-1} \qquad \text{(i)}$$

In the equation (i), character Z denotes Z-function of FFT (fast Fourier transformation) X(f) for transforming a time function into a frequency function. Assuming that character t denotes time and character f denotes frequency, the FFT X(f) is given by:

$$X(f) = \int_0^\infty x(t)\exp(-j2\pi ft)dt$$

where exp(-j2πft) is expressed by the Z-function Z, i.e. Z = exp(-j2πft).

Thus, after a high-frequency band of the inputted signal has been emphasized by the filter F1, the inputted signal is analyzed. If LPC cepstrum method is employed for analysis in the analyzer 21, a predetermined number of LPC cepstral coefficients are calculated as characteristic parameters. When the power of voice exceeds a detection threshold value within a predetermined voice interval, the corresponding characteristic parameter is regarded as the reference voice so as to be stored in the buffer 10. The above described processing from input of the signal for the reference voice is performed for all words to be recognized and thus, registration is completed.

Subsequently, at the time of recognition of a voice, power of environmental noises is measured in the same manner as in the case of registration of the reference voice and then, a voice signal is inputted to the signal input terminal 1. If the power of the environmental noises is not more than the threshold value P1, a characteristic parameter of the inputted voice is calculated by the analyzer 21 in the same manner as in the case of registration of the reference voice so as to be transmitted to the matching portion 8. At the matching portion 8, the distance between the reference voice and the inputted voice is calculated and a word exhibiting a minimum distance is outputted, as recognition result, from the output terminal 9.

On the other hand, if the power of the environmental noises exceeds the threshold value P1, power of the inputted voice signal is calculated for each frame by the power measuring portion 20 and then, the power of the environmental noises and the power of the inputted voice signal are fed to the vowel deciding portion 22. At the vowel deciding portion 22, a decision on a vowel is made based on the following conditions (a) and (b).

(a) The signal level is higher than a sum of the noise level and a constant C.
(b) Five or more frames satisfying the above condition (a) are arranged continuously.

Then it is decided that a frame satisfying the conditions (a) and (b) belongs to a vowel. If it is decided that a frame belongs to a vowel, the inputted signal is fed to the analyzer 23. On the other hand, if it is decided that a frame does not belong to a vowel, the inputted signal is fed to the analyzer 21. If it is decided that a frame is not a vowel, a high-frequency band of the frame is emphasized by the filter expressed by the above equation (i) and the characteristic parameter is calculated in the same manner as in the case of registration of the reference voice. Meanwhile, if it is decided that a frame belongs to a vowel, a high-frequency band of the frame is emphasized by a filter F2 expressed by the following equation (ii).

$$F2(Z) = 1 - 0.6375 \times Z^{-1} \qquad \text{(ii)}$$

Emphasis of the high-frequency band of the frame by the filter F2 is less than that of the filter F1 and tilt or slope of the equation (ii) is milder than that of the equation (i). When environmental noises become large, state of utterance of a speaker changes such that high-frequency band of the voice becomes intense. Therefore, tilt of the filter for emphasizing a high-frequency band in the noisy environment is required to be milder than that in the less noisy environment. After the inputted voice has been passed through the filter F2, the characteristic parameter of the inputted voice is calculated in the same manner as in the case of registration of the reference voice.

The characteristic parameter is fed to the matching portion 8 and recognition result is generated from the output terminal 9 in the same manner as in the case where the power of the environmental noises is not more than the threshold value P1.

Meanwhile, the switch 24 is so actuated as to be changed over to the vowel deciding portion 22 and the analyzer 21 when the power of the environmental noises exceeds the threshold value P1 and is not more than the threshold value P1, respectively. When input of the voice is not being performed, the switch 24 is in the OFF state. The switch 26 is so actuated as to be changed over to the analyzer 23 and the analyzer 21 when the frame is a vowel and is not a vowel, respectively. Meanwhile, the switch 25 is so actuated as to be changed over to the buffer 10 and the matching portion 8 at the time of registration of the reference voice and recognition of the voice, respectively.

However, in the above described known speech recognizer, changes of spectral tilt due to variations of voices are initially compensated for and then, the parameter used for recognition of a voice is analyzed. Thus, the known speech recognizer has such drawbacks that contents of the compensation are not accurately incorporated into the parameter through the analysis processing, so that compensation efficiency is aggravated and in some cases, the compensation does not contribute to improvement of recognition rate at all.

Furthermore, the known speech recognizer has been disadvantageous in that although it is possible to absorb changes of spectral tilt, it is impossible to compensate for changes of resonance frequency characteristic of a vocal sound, (referred to as "formant frequency", hereinbelow) due to variations of voices, thereby resulting in detoriation of the recognition rate.

SUMMARY OF THE INVENTION

Accordingly, an essential object of the present invention is, with a view to eliminating the above described inconveniences inherent in the conventional speech recognizers, to provide a speech recognizer in which variations of voices uttered in a noisy environment are compensated for on a recognition parameter. In the present invention, spectral analysis is performed in an analyzer and orthogonal expansion of a spectrum is calculated as a recognition parameter. Furthermore, in the present invention, a compensation value is calculated in a compensation value calculator by using a formant frequency detected by a formant frequency detector and the recognition parameter is compensated for in a parameter compensator by using a compensation value.

In order to accomplish this object of the present invention, a speech recognizer according to the present invention comprises the features claimed in claim 1.

In accordance with the present invention, changes of the formant frequency due to variations of voices, which have not been hitherto compensated for, can be compensated for efficiently directly on the recognition parameter, thereby resulting in remarkable improvement of recognition rate.

BRIEF DESCRIPTION OF THE DRAWINGS

This object and features of the present invention will become apparent from the following description taken in conjunction with the preferred embodiments thereof with reference to the accompanying drawings, in which:

Fig. 1 is a block diagram of a prior art speech recognizer (already referred to); and
Figs. 2 to 5 are block diagrams showing speech recognizers according to first to fourth embodiments of the present invention, respectively.

Before the description of the present invention proceeds, it is to be noted that like parts are designated by like reference numerals throughout several views of the accompanying drawings.

DETAILED DESCRIPTION OF THE INVENTION

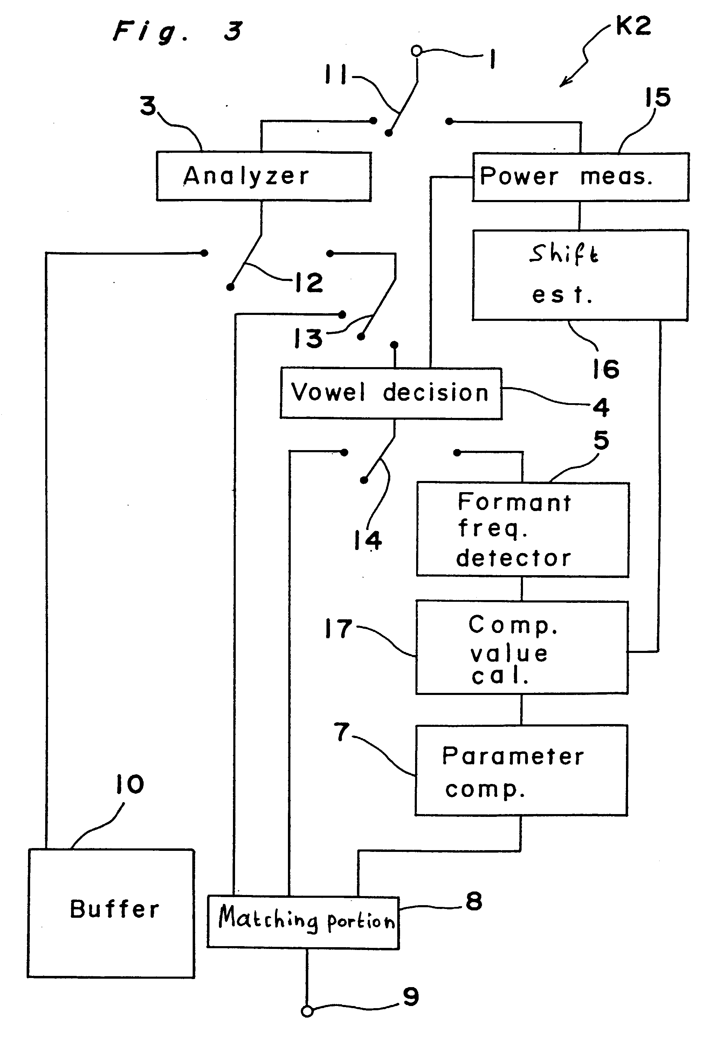

Referring now to the drawings, there is shown in Fig. 2, a word speech recognizer K1 according to a first embodiment of the present invention. The speech recognizer K1 includes a signal input terminal 1, a power measuring portion 2, a first analyzer 3, a vowel deciding portion 4, a formant frequency detector 5, a compensation value calculator 6, a parameter compensator 7, a matching portion 8, an output terminal 9 for outputting recognition result, a buffer 10 for storing a reference voice and switches 11 to 14.

Operation of the speech recognizer K1 of the above described arrangement is described, hereinbelow. Initially, at the time of registration of the reference voice, noises in an environment surrounding the speech recognizer K1 immediately before input of voices are inputted to the signal input terminal 1 and power of the environmental noises is calculated by the power measuring portion 2. If the power of the environmental noises exceeds a predetermined threshold value P1, the environment is regarded as being unsuitable for registration of the reference voice and thus, registration of the reference voice is suspended.

On the contrary, if the power of the environmental noises is not more than the threshold value P1, a reference voice signal inputted to the signal input terminal 1 is fed to the power measuring portion 2 where power of the reference voice signal is calculated for each frame. Meanwhile, the inputted reference voice is fed also to the first analyzer 3 where a characteristic parameter of the reference voice is calculated. Analysis is performed in a known manner and an LPC cepstral coefficient having a predetermined order is calculated as a recognition parameter. The recognition parameter is not restricted to LPC cepstrum and may also be an orthogonal expansion of a spectrum. However, since LPC cepstrum is stable as the recognition parameter and its calculation is relatively easy, LPC cepstrum is employed in this embodiment. The recognition parameter in a frame in which the power exceeds a detection threshold value within a predetermined voice interval is stored in the buffer 10. The above described processing from input of the reference voice signal is performed for all words to be recognized and thus, registration is completed.

Subsequently, at the time of recognition of speech, power of environmental noises is measured by the power measuring portion 2 in the same manner as in the case of registration of the reference voice and then, a voice signal to be recognized is applied to the signal input terminal 1 such that an LPC cepstral coefficient of the inputted voice signal is calculated by the first analyzer 3 in the same manner as in the case of registration of the reference voice. If the power of the environmental noises is not more than the threshold value P1, the parameter of the inputted voice signal is inputted to the matching portion 8. At the matching portion 8, the distance between the reference voice and the inputted voice is calculated and a word exhibiting a minimum distance between the reference voice and the inputted voice is outputted, as recognition result, from the output terminal 9.

On the other hand, if the power of the environmental noises exceeds the threshold value P1, power of the inputted voice signal is calculated for each frame by the power measuring portion 2 and then, the power of the environmental noises and the power of the voice are fed to the vowel deciding portion 4. At the vowel deciding portion 4, a decision on a vowel is made based on the following conditions (a) and (b).

(a) The signal level is higher than a sum of the noise level and a constant C.
(b) Five or more frames satisfying the above condition (a) are arranged continuously.

Then it is decided that a frame satisfying the conditions (a) and (b) is a vowel. If it is decided that a frame belongs to a vowel, the inputted voice signal is fed to the formant frequency detector 5. On the other hand, if it is decided that a frame does not belong to a vowel, the inputted voice signal is fed to the matching portion 8.

If it is decided that a frame belongs to a vowel, a formant frequency of the inputted voice signal is detected by the formant frequency detector 5 so as to compensate for the parameter of the inputted voice signal. The formant frequency is obtained as follows. In the course of calculation of LPC cepstrum acting as the recognition parameter in this embodiment, an LPC parameter a(i) is obtained. By using this LPC parameter a(i), an acoustic spectrum S is given by:

$$S = 1 / A(Z) = 1 / (1 + \sum_{i=1}^{N} a(i) \times z^{-i})$$

where character N denotes an order of analysis. From a real part Re(Z) and an imaginary part Im(Z) of a complex root of this A(Z), the formant frequency f is expressed by:

$$f = (fs/2\pi) \tan^{-1}[Im(Z) / Re(Z)]$$

where character fs denotes the sampling frequency. Thus, it becomes possible to obtain the formant frequency from the LPC parameter.

Subsequently, at the compensation value calculator 6, a compensation value of the LPC cepstrum is calculated by using a product of the formant frequency and a value obtained by differentiating the LPC cepstrum by the formant frequency. Supposing that the formant frequency assumes fi Hz, a compensation amount H(fi, n) of the n-th cepstral coefficient is given by:

$$H(fi, n) = \sum_{i=1}^{M/2} \Delta fi \times (\delta Cn/ \delta fi) \quad --(1)$$

where character $\Delta fi$ denotes a difference in the formant frequency between presence and absence of variations of voices, character Cn denotes n-th cepstral coefficient, character fi denotes i-th formant frequency and character (M/2) denotes the number of formant frequencies.

The n-th cepstral coefficient Cn and the term ($\delta Cn/ \delta fi$) are expressed by:

$$Cn = (2/n) \sum_{i=1}^{M/2} \exp(-n\pi bi/fs) \cdot \cos(2\pi fin/fs)$$

and

$$\delta Cn/ \delta fi = (-4\pi/fs) \exp(-n\pi bi/fs) \cdot \sin(2\pi fin/fs)$$

where character fs denotes sampling frequency and character bi denotes band width of the i-th formant frequency fi.

For example, if compensation is performed for only formant contained in a frequency range of 300-1,500 Hz changeable greatly due to variations of voices in the case of $\Delta fi = 120$ Hz, $bi = P$ 150 Hz and $fs = 10$ KHz, the equation (1) is converted into the following equation (2):

$$H(fi, n) = -\sum_i 0.15 \times exp(-0.047n) \times (-\sin (2\pi fin/ 10000)) \qquad --(2)$$

where 300 Hz < fi < 1500 Hz.

The compensation value calculated by the equation (2) is inputted to the parameter compensator 7 where the LPC cepstral coefficient Cn is compensated for by the following equation (3).

$$Cn = Cn + H(fi, n) \qquad (3)$$

The distance between the reference voice and the inputted voice is calculated in the matching portion 8 in the same manner as in the case where the power of the environmental noises is not more than the threshold value P1. Then, the recognition result is outputted from the output terminal 9.

Meanwhile, in this embodiment, the product between the shift of the formant frequency and the partial differential of the LPC cepstrum by the formant frequency is calculated as the compensation value by using the equation (1). However, the compensation value is not restricted to this scheme. For example, without using the partial differential, identical effects can be achieved by using a value indicative of tilt relative to the formant frequency. Meanwhile, generally in the case where orthogonal expansion of the spectrum is employed as the recognition parameter without using the LPC cepstrum, identical effects can be obtained by using either transformation nucleus of the recognition parameter or tilt of a periodic function relative to the formant frequency, with the periodic function having a period, a phase and a sign identical with those of the transformation nucleus. However, when the LPC cepstrum is employed as the recognition parameter, the compensation amount can be obtained easily and accurately by using the equation (1). Thus, in this embodiment, the equation (1) is employed.

Meanwhile, the switch 11 is so actuated as to be changed over to the power measuring portion 2 and the first analyzer 3 when the power of the environmental noises immediately before input of the voice is measured and the voice is inputted, respectively. The switch 12 is changed over to the buffer 10 at the time of registration of the reference voice and is changed over to the matching portion 8 or the vowel deciding portion 4 at the time of recognition of the voice. The switch 13 is so actuated as to be changed over to the matching portion 8 and the vowel deciding portion 4 when the power of the environmental noises is not more than and exceeds the threshold value P1, respectively. Meanwhile, the switch 14 is so actuated as to be changed over to the formant frequency deciding portion 5 and the matching portion 8 when the inputted voice is a vowel and is not a vowel, respectively.

As described above, in this embodiment, the LPC cepstral coefficient is calculated as the recognition parameter in the first analyzer and the formant frequency of the inputted signal is detected in the formant frequency detector. Furthermore, the compensation value is calculated in the compensation value calculator by using the equation (1) and the recognition parameter is compensated for in the parameter compensator by adding thereto the above compensation value in accordance with changes of the formant frequency of the inputted voice. Accordingly, contents of the compensation are accurately incorporated into the recognition parameter, thereby resulting in improvement of compensation efficiency. Furthermore, since it becomes possible to compensate for changes of the formant frequency due to variations of voices, recognition rate can be improved.

In this embodiment, variations of voices uttered in a noisy environment is described. However, also in changes of voices due to other causes, the present invention is applicable to compensation of changes of voices in which formant frequency varies. Compensation using the equation (1) is most effective for the case in which only limited formant frequencies vary under certain rules. In the case of utterance of voices in the noisy environment, only formant frequencies ranging from about 300 to 1,500 Hz rise, which satisfies the above described condition for the most effective compensation. Accordingly, compensation of the present invention is especially effective for variations of voices in the noisy environment.

Fig. 3 shows a word- speech recognizer K2 according to a second embodiment of the present invention. The speech recognizer K2 includes a power measuring portion 15, a shift estimator 16 and a compensation value calculator 17. Since other constructions of the speech recognizer K2 are similar to those of the speech recognizer K1, description thereof is abbreviated for the sake of brevity.

Operation of the speech recognizer K2 of the above described arrangement is described, hereinbelow. Initially, at the time of registration of the reference voice, noises in an environment surrounding the speech recognizer K2 immediately before input of voices are inputted to the signal input terminal 1 and power of the environmental noises is calculated by the power measuring portion 15. If the power of the environmental noises exceeds the predetermined threshold value P1, the environment is regarded as being unsuitable for registration of the reference voice and thus, registration of the reference voice is suspended.

On the other hand, if the power of the environmental noises is not more than the threshold value P1, the reference voice inputted to the signal input terminal 1 is fed to the first analyzer 3 where a characteristic parameter of the reference voice is calculated. Analysis is performed in a known manner and an LPC cepstral coefficient having a predetermined order is calculated as a recognition parameter. The characteristic parameter in a frame in which the power exceeds a detection threshold value within a predetermined voice interval is stored in the buffer 10. The above described processing from input of the reference voice signal is performed for all words to be recognized and thus, registration is completed.

Subsequently, at the time of recognition of a voice, power of environmental noises is measured by the power measuring portion 15 in the same manner as in the case of registration of the reference voice and then, a voice signal to be recognized is applied to the signal input terminal 1 such that a recognition parameter of the inputted voice signal is calculated by the first analyzer 3 in the same manner as in the case of registration of the reference voice. If the power of the environmental noises is not more than the threshold value P1, the parameter of the inputted voice signal is inputted to the matching portion 8. At the matching portion 8, the distance between the reference voice and the inputted voice is calculated and a word exhibiting a minimum distance between the reference voice and the inputted voice is outputted, as recognition result, from the output terminal 9.

On the contrary, if the power of the environmental noises exceeds the threshold value P1, the power of the environmental noises is inputted to the shift estimator 16. At the shift estimator 16, the shift $\Delta f$ of formant frequency due to variations of voices uttered in a noisy environment is calculated from a power Pn of the environmental noises by using the following equation (4):

$$\Delta f = 10 \times (Pn - P1) \tag{4}$$

where the powers Pn and P1 are expressed in unit of dB and the shift $\Delta f$ is expressed in unit of Hz.

The equation (4) represents that in the case where environmental noises are small, variations of voices are reduced and thus, the shift of formant frequency is also small, while in the case where environmental noises are large, variations of voices are increased and thus, the shift of formant frequency is also large.

Subsequently, a voice signal to be recognized is inputted to the signal input terminal 1 and is fed to the first analyzer 3 where a parameter and power of the inputted voice signal are calculated. The power of the environmental noises and the power of the inputted voice signal are inputted to the vowel deciding portion 4. At the vowel deciding portion 4, a decision on a vowel is made based on the conditions (a) and (b) in the same manner as the first embodiment. Therefore, it is decided that a frame satisfying the conditions (a) and (b) is a vowel. If it is decided that a frame is vowel, the inputted signal is fed to the formant frequency detector 5. On the other hand, if it is decided that a frame is not a vowel, the inputted signal is fed to the matching portion 8.

If it is decided that a frame is vowel, a formant frequency of the inputted voice signal is detected so as to compensate for the parameter of the inputted voice signal. The formant frequency is obtained in the same manner as in the first embodiment. Therefore, it is likewise possible to obtain the formant frequency from the LPC parameter.

Subsequently, at the compensation value calculator 17, a compensation value of the LPC cepstrum is calculated by using a product of the formant frequency and a value obtained by differentiating the LPC cepstrum by the formant frequency in the same manner as in the first embodiment. The value obtained from the equation (4) is employed as the shift $\Delta f$ of formant frequency. When compensation is performed for only formant contained in a frequency range of 300-1,500 Hz changeable greatly due to variations of voices by setting the band width bi of i-th formant and the sampling frequency fs at 150 Hz and 10 KHz, respectively in the equation (1'), the equation (1) is converted into the following equation (5)

$$H(fi, n) = -\sum_{i} 1.26 \times 10^{-3} \times \Delta f \times \exp(-0.047n) \times$$

$$(-\sin(2\pi fin/10000)) \quad --(5)$$

where 300 Hz < fi < 1500 Hz.

The compensation value calculated by the equation (5) is inputted to the parameter compensator 7 where the LPC cepstrum coefficient Cn is compensated for by the equation (3) in the same manner as in the first embodiment. The distance between the reference voice and the inputted voice is calculated in the matching portion 8 in the case where the power of the environmental noises is not more than the threshold value P1. Then, recognition result is outputted from the output terminal 9.

Meanwhile, the switches 11 to 14 are changed over in the same manner as in the first embodiment.

As described above, in the second embodiment, the power of the environmental noises is measured by the power measuring portion and the shift of the formant frequency due to variations of voices is estimated by the shift estimator based on the equation (4) by using the power of the environmental noises. Meanwhile, the cepstral coefficient is calculated as the recognition parameter by the first analyzer and the formant frequency of the inputted voice signal is detected by the formant frequency detector. Furthermore, the compensation value is calculated by the compensation value calculator by using the estimated shift of the formant frequency and the parameter of the inputted voice signal is compensated for by the parameter compensator by adding the compensation value to the parameter of the inputted voice signal in accordance with variations of the inputted voice. Therefore, it becomes possible to compensate for variations of the formant frequency due to utterance in the noisy environment and thus, recognition rate can be improved.

Meanwhile, by compensating for the recognition parameter itself, contents of the compensation are accurately incorporated into the recognition parameter, thereby resulting in improvement of compensation efficiency. Furthermore, when the compensation value proper for magnitude of the environmental noises is employed by estimating the shift of the formant frequency from the power of the environmental noises, it becomes possible to further improve compensation effects.

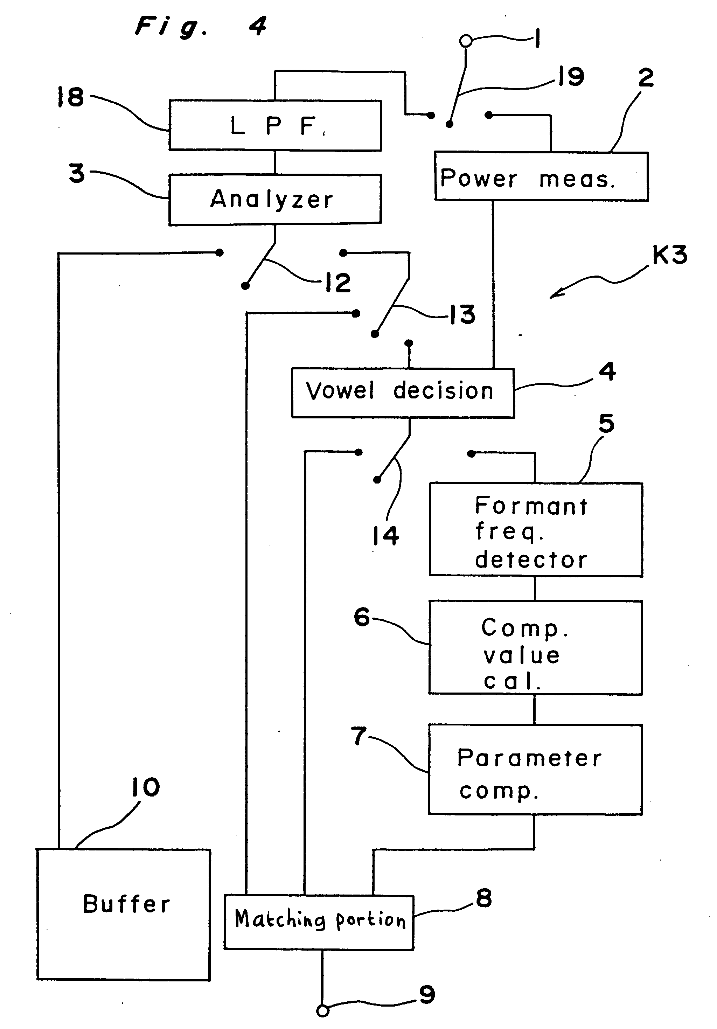

Fig. 4 shows a word speech recognizer K3 according to a third embodiment of the present invention. The speech recognizer K3 includes a low-pass filter 18 and a switch 19. Since other constructions of the speech recognizer K3 are similar to those of the speech recognizer K1, description thereof is abbreviated for the sake of brevity.

Operation of the speech recognizer K3 of the above described arrangement is described, hereinbelow. Initially, at the time of the reference voice, noises in an environment surrounding the speech recognizer K3 immediately before input of voices are inputted to the signal input terminal 1 and power of the environmental noises is calculated by the power measuring portion 2. If the power of the environmental noises exceeds the threshold value P1, the environment is regarded as not being suitable for registration of the reference voice and thus, registration of the reference voice is suspended.

On the other hand, if the power of the environmental noises is not more than the threshold value P1, the reference voice signal is inputted to the low-pass filter 18. After cut-off frequency has been passed through the 2.5 KHz low-pass filter 18, the reference voice signal is fed to the first analyzer 3. At the first analyzer 3, the LPC cepstral coefficients having a predetermined order is calculated as the recognition parameter. Analysis is performed in the same manner as in the above first and second embodiments. The characteristic parameter in a frame in which the power exceeds a detection threshold value within a predetermined voice interval is stored in the buffer 10. The above described processing from input of the reference voice signal is performed for all words to be recognized and thus, registration is completed.

Subsequently, at the time of recognition of a voice, power of environmental noises is measured by the power measuring portion 2 in the same manner as in the case of registration of the reference voice and then, a voice signal to be recognized is inputted to the signal input terminal 1. The inputted voice signal is passed through the low-pass filter 18 in the same manner as in the case of registration of the reference voice and then, is fed to the first analyzer 3 where the LPC cepstral coefficient is calculated as the parameter of the inputted voice signal.

If the power of the environmental noises is not more than the threshold value P1, this parameter is inputted to the matching portion 8. At the matching portion 8, the distance between the reference voice and the inputted voice is calculated and a word exhibiting a minimum distance between the reference voice and the inputted voice is outputted, as recognition result, from the output terminal 9.

On the contrary, if the power of the environmental noises exceeds the threshold value P1, the power of the environmental noises is inputted to the vowel deciding portion 4 together with the power of the inputted voice signal which is calculated in the analyzer 3 together with the parameter. At the vowel deciding portion 4, a decision on a vowel is made based on the conditions (a) and (b) in the same manner as in the first embodiment. If it is decided that a frame is vowel, parameter of the inputted voice signal is fed to the formant frequency detector 5. On the other hand, if it is decided that a frame is not a vowel, the parameter of the inputted voice signal is fed to the matching portion 8.

If it is decided that a frame is vowel, a formant frequency of the inputted voice signal is detected by the formant frequency detector 5 so as to compensate for the parameter of the inputted voice signal. The formant frequency is obtained from the LPC parameter in the same manner as in the first embodiment.

Subsequently, at the compensation value calculator 6, a compensation value of the LPC cepstrum is calculated by using a product of the formant frequency and a value obtained by differentiating the LPC cepstrum by the formant frequency in the same manner as in the first embodiment.

Under the same conditions as the first embodiment, the compensation value of the equation (2) and the compensated LPC cepstral coefficient of the equation (3) are obtained in the same manner as in the first embodiment.

The switch 19 is so actuated as to be changed over to the power measuring portion 2 and the low-pass filter 18 when the power of the environmental noises immediately before input of the voice is measured and the voice is inputted, respectively. The switches 12 to 14 are changed over in the same manner as in the first embodiment.

As described above, in this embodiment, the high-band spectrum in which due to variations of voices, not only the spectrum changes greatly but the formant power rises is eliminated by the low-pass filter, while the linear prediction coefficient and the cepstral coefficient are calculated by the analyzer. Meanwhile, the low formant frequency is detected by the formant frequency detector and the compensation value is calculated in the compensation value calculator by using the equation (1). Furthermore, the parameter is compensated for by the compensation value in accordance with variations of the pattern of the inputted signal in the parameter compensator and the distance between the compensated parameter of the inputted voice and the parameter of the reference voice is calculated. Thus, since the low formant frequency is positively detected, changes of the formant frequency, which mainly cause variations of voices, can be reliably compensated for each inputted voice by using the detected formant frequency. Meanwhile, since the high-band spectrum in which voices vary extremely is eliminated by using the low-pass filter, it becomes possible to absorb deviation of the recognition parameter due to differences of voices. Consequently, it is possible to improve recognition rate in a noisy environment.

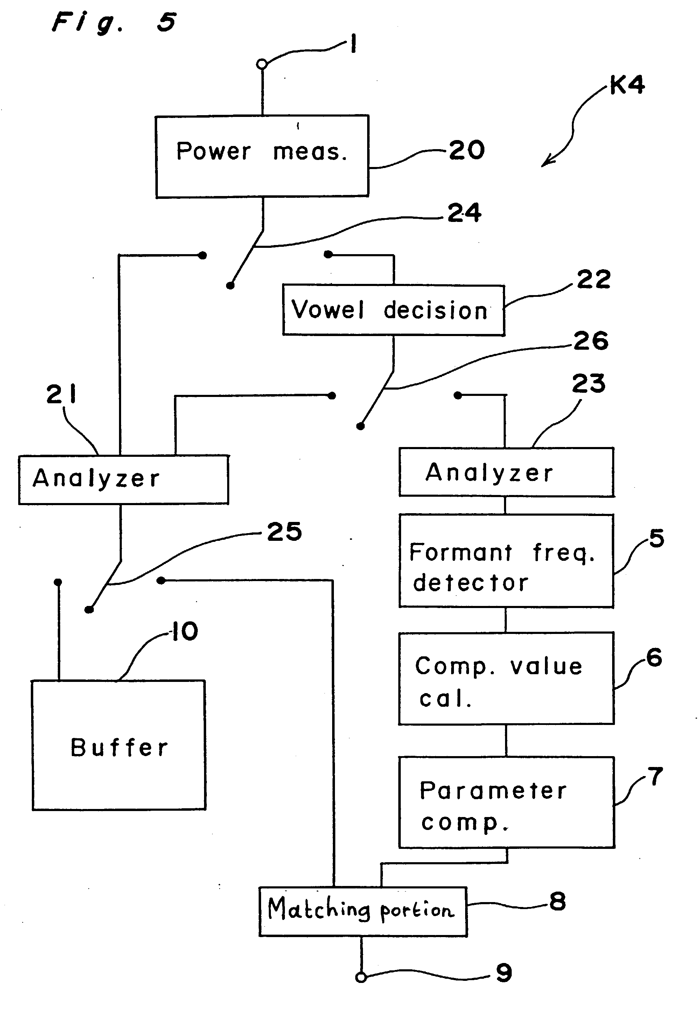

Finally, Fig. 5 shows a word speech recognizer K4 according to a fourth embodiment of the present invention. The speech recognizer K4 includes a power measuring portion 20, second and third analyzers 21 and 23 and switches 24, 25 and 26. The second and third analyzers 21 and 23 are the same as the analyzers 21 and 23 of the known speech recognizer of Fig. 1, respectively. Since other constructions of the speech recognizer K4 are similar to those of the speech recognizer K1, description thereof is abbreviated for the sake of brevity.

Operation of the speech recognizer K4 of the above described arrangement is described, hereinbelow. Initially, at the time of registration of the reference voice, noises in an environment surrounding the speech recognizer K4 immediately before input of voices are inputted to the signal input terminal 1 and power of the environmental noises is calculated by the power measuring portion 20. If the power of the environmental noises exceeds the threshold value P1, the environment is regarded as being unsuitable for registration of the reference voice and thus, registration of the reference voice is suspended.

On the other hand, if the power of the environmental noises is not more than the threshold value, a reference voice signal inputted to the signal input terminal 1 is fed to the second analyzer 21 where an LPC cepstral coefficient is calculated as a recognition parameter. At the second analyzer 21, the inputted signal is passed through a filter F1 expressed by the following equation (6):

$$F1(Z) = 1 - 0.9375 \times Z^{-1} \tag{6}$$

where character Z denotes a Z-function.

After high-band spectrum of the inputted signal has been emphasized by the filter F1, the inputted signal is analyzed. When the power of the environmental noises exceeds a detection threshold value within a predetermined voice interval, the corresponding characteristic parameter is regarded as the reference voice so as to be stored in the buffer 10. The above described processing from input of the reference voice signal is performed for all words to be recognized and thus, registration is completed.

Subsequently, at the time of recognition of a voice, power of environmental noises is measured in the same manner as in the case of registration of the reference voice and then, a voice signal to be recognized is inputted to the signal input terminal 1. If the power of the environmental noises is not more than the threshold value P1, the inputted voice signal is passed through the filter F1 in the same manner as in the case of registration of the reference voice and then, a characteristic parameter of the inputted voice signal is calculated in the second analyzer 21 so as to be inputted to the matching portion 8. At the matching portion 8, the distance between the reference voice and the inputted voice is calculated and a word exhibiting a minimum distance between the reference voice and the inputted voice outputted, as recognition result, from the output terminal 9.

On the contrary, if the power of the environmental noises exceeds the threshold value P1, power of the voice signal is calculated for each frame by the power measuring portion 20. Then, the power of the environmental noises and the power of the voice signal are inputted to the vowel deciding portion 22. At the vowel deciding portion, a decision on a vowel is made based on the conditions (a) and (b) in the same manner as in the first embodiment. Hence, it is decided that a frame satisfying the conditions (a) and (b) is a vowel. If it is decided that a frame is vowel, the inputted signal is fed to the third analyzer 23. On the other hand, if it is decided that a frame is not a vowel, the inputted signal is fed to the second analyzer 21.

If it is decided that a frame is a vowel, a high-frequency band of the frame is emphasized by a filter F2 expressed by the following equation (7).

$$F2(Z) = 1 - 0.6375 \times Z^{-1} \tag{7}$$

Emphasis of the high-frequency band of the frame by the filter F2 is less than that of the filter F1 and tilt of the equation (7) is milder than that of the equation (6). When the environmental noises become large, state of utterance of a speaker changes such that high-band spectrum of the voice becomes intense. Therefore, tilt of the filter for emphasizing the high-band spectrum in the noisy environment is required to be milder than that in the less noisy environment. After the inputted voice has been passed through the filter F2, the characteristic parameter of the inputted voice is performed in the same manner as in the case of registration of the reference voice.

Subsequently, the formant frequency of the inputted voice signal is detected by the formant frequency detector 5. The formant frequency is obtained from the LPC parameter in the same manner as in the first embodiment.

Thereafter, a compensation value of the LPC cepstrum is calculated by the compensation value calculator 6 in the same manner as in the first embodiment.

Under the same conditions of the first embodiment, the compensation value of the equation (2) and the compensated LPC cepstrum of the equation (3) are obtained in the same manner as in the first embodiment.

The switch 24 is so actuated as to be changed over to the vowel deciding portion 4 and the the the second analyzer 21 when the power of the environmental noises exceeds and is not more than the threshold value P1, respectively. The switch 25 is so actuated as to be changed over to the buffer 10 and the matching portion 8 at the time of registration of the reference voice and recognition of the inputted voice, respectively. The switch 26 is so actuated as to be changed over to the third analyzer 23 and the second analyzer 21 when a frame is a vowel and is not a vowel, respectively.

As described above, in this embodiment, the linear coefficient of the filter for emphasizing the high-band spectrum is changed only for a voice which varies greatly in a noisy environment having a small signal-to-noise ratio, in the third analyzer 23 such that emphasis of the high-band spectrum of the voice is lessened. Then, the linear prediction coefficient and the cepstrum parameter are calculated and the low formant frequency is detected by the formant frequency detector. Meanwhile, the compensation value is calculated in the compensation value calculator by using the formant frequency and the transformation nucleus of each parameter. Furthermore, the parameter of the inputted signal is compensated for in accordance with changes of the formant frequency of the inputted signal by the parameter compensator and the distance between the compensated parameter of the inputted voice and the parameter of the reference voice is calculated by the matching portion. Therefore, peak of the high formant frequency is restricted to a low level. As a result, the low formant frequency can be detected positively. By using the detected formant frequency, changes of the formant frequency, which mainly cause variations of voices, can be positively compensated for for each inputted voice.

Meanwhile, since emphasis of the high-band spectrum is lessened, the power of the high-band spectrum caused by variations of voices is restricted, so that it becomes possible to absorb deviation of the recognition parameter due to difference of voices. Consequently, recognition rate in the noisy environment can be improved.

Although the present invention has been fully described by way of example with reference to the accompanying drawings, it is to be noted here that various changes and modifications will be apparent to those skilled in the art. Therefore, unless otherwise such changes and modifications depart from the scope of the present invention as defined by the claims, they should be construed as being included therein.

## Claims

1. A speech recognizer comprising:

> an analyzer (3) for calculating, based on a spectral analysis of an inputted signal per unit of time, a characteristic parameter being the formant frequency and a recognition parameter being an LPC cepstral coefficient having a predetermined order or
> an orthogonal expansion of spectrum;
> a parameter compensator (7) which compensates for the recognition parameter by using a shift of the formant frequency due to variations of voices due to changes of noise level in an environment at the time of use of said speech recognizer; and

a matching portion (8) which calculates the distance between reference parameters and compensated recognition parameter so as to output a recognition result.

2. The speech recognizer as claimed in claim 1, further comprising:

   a formant frequency detector (5) for detecting a formant frequency of the inputted signal; and
   a compensation value calculator (6; 17) for calculating a compensation value of the recognition parameter by using the formant frequency;
   wherein said parameter compensator (7) compensates for the recognition parameter in accordance with variations of the inputted signal by using the compensation value.

3. The speech recognizer (K1) as claimed in claim 2, wherein said compensation value calculator (6) calculates the compensation value by using a shift of the formant frequency due to variations of voices and either a transformation nucleus of the recognition parameter or a periodic function having a period, a phase and a sign identical with those of the transformation nucleus.

4. The speech recognizer (K1) as claimed in claim 2, wherein said compensation value calculator (6) calculates the compensation value by using a shift of the formant frequency due to variations of voices and a tilt of the recognition parameter relative to the formant frequency.

5. The speech recognizer (K1) as claimed in claim 2, wherein said compensation value calculator (6) calculates the compensation value by using a shift of the formant frequency due to variations of voices and a value obtained by differentiating the recognition parameter by the formant frequency.

6. The speech recognizer (K1) as claimed in claim 2, wherein said compensation value calculator (6) calculates the compensation value based on the following equation (1):

$$H(f_i, n) \equiv \sum_{i=1}^{M/2} \Delta f_i \times (\delta C_n / \delta f_i) \quad --(1)$$

where $H(f_i, n)$ denotes a compensation amount of an n-th cepstral coefficient $C_n$ when the formant frequency is $f_i$ Hz, $\Delta f_i$ denotes a difference in the formant frequency between presence and absence of variations of voices, $f_i$ denotes an i-th formant frequeny and M/2 denotes the number of formant frequencies; the n-th cepstral coefficient $C_n$ and a term $(\delta C_n / \delta f_i)$ of the equation (1) being given by:

$$C_n = (2/n) \sum_{i=1}^{M/2} \exp(-n\pi b_i/f_s) \cdot \cos(2\pi f_i n/f_s)$$

and

$$\delta C_n / \delta f_i = (-4\pi/f_s) \exp(-n\pi b_i/f_s) \cdot \sin(2\pi f_i n/f_s)$$

where $b_i$ denotes a band width of the i-th formant frequency $f_i$ and $f_s$ denotes a sampling frequency.

7. The speech recognizer (K2) as claimed in claim 2, further comprising:

   a power measuring portion (15) for measuring a power of environmental noises; and
   a shift estimator (16) for estimating a shift of a formant frequency due to variations of voices by using the power of the environmental noises;
   wherein said compensation value calculator (17) calculates the compensation value of the recognition parameter by using the shift estimated by said shift estimator (16); and
said parameter compensator (7) compensates for the recognition parameter by the compensation value in accordance with variations of the inputted signal due to utterance in a noisy environment.

8. The speech recognizer (K3) as claimed in claim 2, further comprising: a power damper (18) for damping a power of a high-frequency band of a voice.

9. The speech recognizer (K4) as claimed in claim 2, further comprising: a spectral tilt compensator (23) which compensates for spectral tilt of the inputted signal so as to make the spectral tilt of the inputted signal coincident with that of a reference signal.

**Patentansprüche**

1. Spracherkennungseinrichtung mit:

einem Analysator (3) zur Berechnung eines charakteristischen Parameters, bei dem es sich um die Formantfrequenz handelt, und eines Erkennungsparameters, bei dem es sich um einen LPC-Cepstral-Koeffizienten mit einer bestimmten Ordnung oder eine orthogonale Ausdehnung des Spektrums handelt, auf der Grundlage einer Spektralanalyse eines eingegebenen Signals pro Zeiteinheit;
einer Parameterkompensationseinrichtung (7), die den Erkennungsparameter durch Verwendung einer Verschiebung der Formantfrequenz wegen Veränderungen der Stimmen aufgrund von Änderungen des Geräuschpegels in einer Umgebung zum Zeitpunkt der Verwendung der Spracherkennungseinrichtung kompensiert; und
einem Abgleichabschnitt (8), der den Abstand zwischen Referenzparametern und dem kompensierten Erkennungsparameter berechnet, um ein Erkennungsergebnis auszugeben.

2. Spracherkennungseinrichtung nach Anspruch 1, ferner mit:

einer Formantfrequenzerkennungseinrichtung (5) zur Erkennung einer Formantfrequenz des eingegebenen Signals; und
einer Kompensationswertberechnungseinrichtung (6; 17) zur Berechnung eines Kompensationswertes des Erkennungsparameters durch Verwendung der Formantfrequenz;
wobei die Parameterkompensationseinrichtung (7) den Erkennungsparameter in Abhängigkeit von Veränderungen des eingegebenen Signals durch Verwendung des Kompensationswertes kompensiert.

3. Spracherkennungseinrichtung (K1) nach Anspruch 2, bei welcher die Kompensationswertberechnungseinrichtung (6) den Kompensationswert durch Anwendung einer Verschiebung der Formantfrequenz aufgrund von Veränderungen bestimmen und entweder eines Transformationsnukleus des Erkennungsparameters oder einer periodischen Funktion mit einer Periode, einer Phase und einem Vorzeichen identisch mit denen des Transformationsnukleus berechnet.

4. Spracherkennungseinrichtung (K1) nach Anspruch 2, bei welcher die Kompensationswertberechnungseinrichtung (6) den Kompensationswert durch Anwendung einer Verschiebung der Formantfrequenz aufgrund von Veränderungen von Stimmen und eines Abfalls des Erkennungsparameters gegenüber der Formantfrequenz berechnet.

5. Spracherkennungseinrichtung (K1) nach Anspruch 2, bei welcher die Kompenstionswertberechnungseinrichtung (6) den Kompensationswert durch Anwendung einer Verschiebung der Formantfrequenz aufgrund von Veränderungen von Stimmen und eines Wertes, den man durch Differenzierung des Erkennungsparameters durch die Formantfrequenz erhält, berechnet.

6. Spracherkennungseinrichtung (K1) nach Anspruch 2, bei welcher die Kompensationswertberechnungseinrichtung (6) den Kompensationswert auf der Grundlage der folgenden Gleichung (1) berechnet:

$$H(fi, n) = \sum_{i=1}^{M/2} \Delta fi \times (\delta Cn / \delta fi) \qquad (1)$$

wobei H(fi, n) eine Kompensationshöhe eines n-ten Cepstralkoeffizienten Cn, wenn die Formantfrequenz fi Hz ist, Δfi eine Differenz in der Formantfrequenz zwischen Anwesenheit und Abwesenheit von Veränderungen von Stimmen, fi eine i-te Formantfrequenz und M/2 die Anzahl der Formantfrequenzen bezeichnet; wobei der n-te Cepstral-Koeffizient Cn und ein Ausdruck ($\delta$ Cn/$\delta$ fi) der Gleichung (1) angegeben ist durch

$$Cn = (2/n) \sum_{i=1}^{M/2} \exp(-n\pi bi/fs) \cdot \cos(2\pi fin/fs)$$

und

$$\delta Cn / \delta fi = (-4\pi/fs) \exp(-n\pi bi/fs) \cdot \sin(2\pi fin/fs)$$

wobei bi eine Bandbreite der i-ten Formantfrequenz fi und fs eine Abtastfrequenz bezeichnet.

7. Spracherkennungseinrichtung (K2) nach Anspruch 2, ferner mit:

   einem Pegelmeßabschnitt (15) zur Messung eines Pegels von Umgebungsgeräuschen; und
   einer Verschiebungsschätzeinrichtung (16) zum Abschätzen einer Verschiebung einer Formantfrequenz aufgrund von Veränderungen von Stimmen durch Verwendung des Pegels der Umgebungsgeräusche;
   wobei die Kompensationswertberechnungseinrichtung (17) den Kompensationswert des Erkennungsparameters durch Verwendung der von der Verschiebungsschätzeinrichtung (16) geschätzten Verschiebung berechnet; und
   die Parameterkompensationseinrichtung (7) den Erkennungsparameter durch den Kompensationswert in Abhängigkeit von Veränderungen des eingegebenen Signals aufgrund von Sprachäußerungen in einer geräuschvollen Umgebung kompensiert.

8. Spracherkennungseinrichtung (K3) nach Anspruch 2, ferner mit einer Pegeldämpfungseinrichtung (18) zum Dämpfen eines Pegels eines Hochfrequenzbandes einer Stimme.

9. Spracherkennungseinrichtung (K4) nach Anspruch 2, ferner mit einer Spektralabfallkompensationseinrichtung (23), welche den spektralen Abfall des eingegebenen Signals kompensiert, um den spektralen Abfall des eingegebenen Signals koinzident mit dem eines Referenzsignals zu machen.

**Revendications**

1. Dispositif de reconnaissance de la parole comprenant :

   un analyseur (3) destiné à calculer, sur la base d'une analyse spectrale d'un signal reçu en entrée par unité de temps, un paramètre caractéristique qui est la fréquence du formant et un paramètre de reconnaissance qui est un coefficient cepstral LPC présentant un ordre prédéterminé ou une dilatation orthogonale du spectre, un compensateur de paramètre (7) qui compense le paramètre de reconnaissance en utilisant un décalage de la fréquence du formant dû à des variabilités des voix pendant des variations du niveau de bruit dans un environnement au moment de l'utilisation du dispositif de reconnaissance de la parole, et une partie d'adaptation (8) qui calcule la distance entre des paramètres de référence et un paramètre de reconnaissance compensé de façon à fournir en sortie un résultat de reconnaissante.

2. Dispositif de reconnaissance de la parole selon, la revendication 1, comprenant en outre :

   un détecteur de fréquence de formant (5) destiné à détecter une fréquence du formant du signal reçu en entrée, et
   un calculateur de valeur de compensation (6 ; 17) destiné à calculer une valeur de compensation du paramètre de reconnaissance en utilisant la fréquence du formant,
   dans lequel ledit compensateur de paramètre (7) compense le paramètre de reconnaissance conformément à des variations du signal reçu en entrée en utilisant la valeur de compensation.

3. Dispositif de reconnaissance de la parole (K1) selon la revendication 2, dans lequel ledit calculateur de valeur de compensation (6) calcule la valeur de compensation en utilisant un décalage de la fréquence du formant dû à des variabilités des voix et soit un noyau de la transformation du paramètre de reconnaissance, soit une fonction périodique présentant une période, une phase et un signe identiques à ceux du noyau de la transformation.

4. Dispositif de reconnaissance de la parole (K1) selon la revendication 2, dans lequel ledit calculateur de valeur de compensation (6) calcule la valeur de compensation en utilisant un décalage de la fréquence du formant dû à des variabilités des voix et une inclinaison du paramètre de reconnaissance relativement à la fréquence du formant.

5. Dispositif de reconnaissance de la parole (K1) selon la revendication 2, dans lequel ledit calculateur de valeur de compensation (6) calcule la valeur de compensation en utilisant un décalage de la fréquence du formant dû à des variabilités des voix et une valeur obtenue en différentiant le paramètre de reconnaissance par rapport à la fréquence du formant.

6. Dispositif de reconnaissance de la parole (K1) selon la revendication 2, dans lequel ledit calculateur de valeur de compensation (6) calcule la valeur de compensation sur la base de l'équation suivante (1) :

$$H(f_i, n) \equiv \sum_{i=1}^{M/2} \Delta f_i \times (\delta C_n / \delta f_i) \quad --(1)$$

   dans laquelle $H(f_i, n)$ représente une valeur de compensation d'un $n^{ème}$ coefficient cepstral $C_n$ lorsque la fréquence du formant est $f_i$ Hz, $\Delta f_i$ représente une différence de la fréquence du formant entre la présence et l'absence de variabilités des voix, $f_i$ représente une $i^{ème}$ fréquence du formant et $M/2$ représente le nombre des fréquences du formant, le $n^{ème}$ coefficient cepstral $C_n$ et un terme $(\delta C_n / \delta f_i)$ de l'équation (1) étant donné par :

$$C_n = (2/n) \sum_{i=1}^{M/2} \exp(-n\pi b_i / f_s) \cdot \cos(2\pi f_i n / f_s)$$

   et

$$\delta C_n / \delta f_i = (-4\pi/f_s) \exp(-n\pi b_i / f_s) \cdot \sin(2\pi f_i n / f_s)$$

   dans lesquelles $b_i$ représente une largeur de bande de la $i^{ème}$ fréquence du formant $f_i$ et $f_s$ représente une fréquence d'échantillonnage.

7. Dispositif de reconnaissance de la parole (K2) selon la revendication 2, comprenant en outre :

   une partie de mesure de puissance (15) destinée à mesurer une puissance des bruits de l'environnement, et
   un estimateur de décalage (16) destiné à estimer un décalage d'une fréquence de formant dû à des variabilités des voix en utilisant la puissance des bruits de l'environnement,
   dans lequel ledit calculateur de valeur de compensation (17) calcule la valeur de compensation du paramètre de reconnaissance en utilisant le décalage estimé par ledit estimateur de décalage (16), et
   ledit compensateur de paramètre (7) compense les paramètres de reconnaissance grâce à la valeur de compensation conformément aux variations du signal reçu en entrée dues à une prononciation dans un environnement bruyant.

8. Dispositif de reconnaissance de la parole (K3) selon la revendication 2, comprenant en outre :

un affaiblisseur de puissance (18) destiné à affaiblir une puissance d'une bande de hautes fréquences d'une voix.

9. Dispcsitif de reconnaissance de la parole (K4) selon la revendication 2, comprenant en outre :

un compensateur d'inclinaison spectrale (23) qui compense l'inclinaison spectrale du signal reçu en entrée de façon à faire coïncider l'inclinaison spectrale du signal reçu en entrée avec celle d'un signal de référence.

# Fig. 1 PRIOR ART

Fig. 2

*Fig. 3*

# Fig. 4

*Fig. 5*